# EUROPEAN PATENT APPLICATION

(11) **EP 1 795 466 A1**
(43) Date of publication of application: **13.06.2007**
(21) Application number: 06024723.6
(22) Date of filing: 29.11.2006
(51) Int. Cl.: B65G 27/08

(54) **Vibratory conveyor**

(30) Priority: 06.12.2005 US 296105
(71) Applicant: GENERAL KINEMATICS CORPORATION, Crystal Lake, IL 60014 (US)
(72) Inventor: Massmann, Steve, Poplar Grove, IL 61065 (US)
(74) Representative: Heselberger, Johannes

(57) **Abstract**

A vibratory conveyor (20) includes a trough (22), a linear-stroke exciter mass assembly (100) coupled to the trough (22) at a central region (40) thereof, first and second vibration generators (90,92) attached to the trough (22) on opposite sides of the exciter mass assembly (100), and isolators (72,74) coupled to and supporting the trough (22).

## Description

### Background

This patent is directed to a conveyor, and, in particular, to a vibratory conveyor.

### Summary of the Invention

In one aspect, a vibratory conveyor includes a trough, a linear-stroke exciter mass assembly coupled to the trough at a central region thereof, first and second vibration generators attached to the trough on opposite sides of the exciter mass assembly, and isolators coupled to and supporting the trough.

Additional aspects of the disclosure are defined by the claims of this patent.

### Brief Description of the Drawings

Fig. 1 is a plan view of a vibratory conveyor;

Fig. 2 is a rear view of the vibratory conveyor of Fig. 1;

Fig. 3 is an enlarged plan view of the vibratory conveyor of Fig. 1, with the trough assembly removed for clarity;

Fig. 4 is a cross-sectional view of the vibratory conveyor of Fig. 1 taken about line 4-4 in Fig. 1; and

Fig. 5 is a cross-sectional view of the vibratory conveyor of Fig. 1 taken about line 5-5 in Fig. 1.

### Detailed Description of Various Embodiments

Although the following text sets forth a detailed description of different embodiments of the invention, it should be understood that the legal scope of the invention is defined by the words of the claims set forth at the end of this patent. The detailed description is to be construed as exemplary only and does not describe every possible embodiment of the invention since describing every possible embodiment would be impractical, if not impossible. Numerous alternative embodiments could be implemented, using either current technology or technology developed after the filing date of this patent, which would still fall within the scope of the claims defining the invention.

It should also be understood that, unless a term is expressly defined in this patent using the sentence "As used herein, the term ' ' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term be limited, by implication or otherwise, to that single meaning. Finally, unless a claim element is defined by reciting the word "means" and a function without the recital of any structure, it is not intended that the scope of any claim element be interpreted based on the application of 35 U.S.C. §112, sixth paragraph.

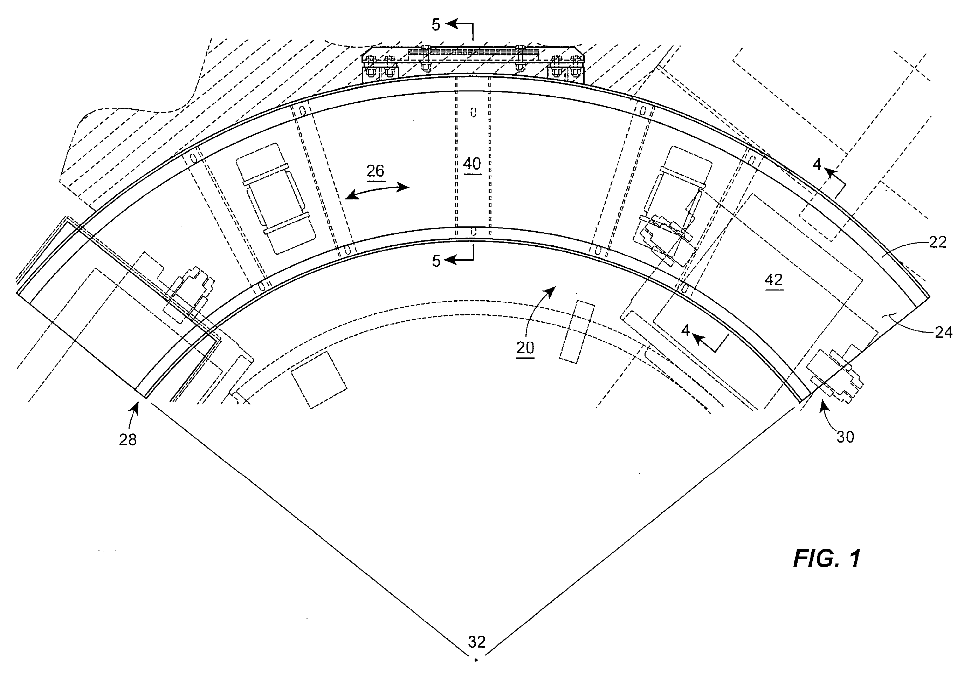

Fig. 1 illustrate an embodiment of a bi-directional vibratory conveyor 20. While the illustrated subject matter is referred to as a conveyor, it may also be referred to as a feeder, as will be recognized by one skilled in the art. The conveyor 20 may be employed in a variety of different settings including, but not limited to, foundries, agricultural and/or food processing plants, bulk handling and processing plants, and the like.

As illustrated in Figs. 1-5, the conveyor 20 may be used to transport objects along a curved path in either direction, as desired, according to the motion applied to the trough assembly. However, according to other embodiments, the conveyor may be used to transport objects along a straight path in either direction, as desired. Thus, the advantages of the conveyor 20 are not limited by its use to transport objects along a curved path, as illustrated in Figs. 1-5.

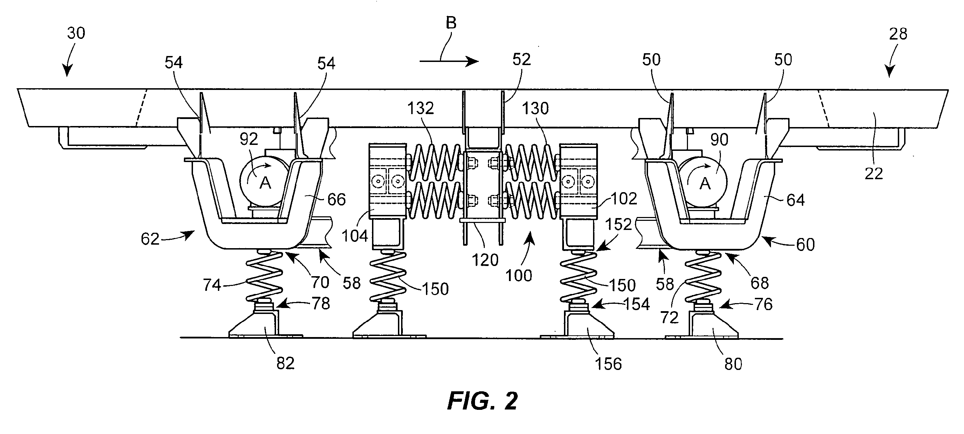

As mentioned above, the conveyor 20 includes a trough assembly 22 having an elongated, generally horizontal bed 24 for supporting objects to be transported. A curved path 26 extends along the bed 24 between first and second ends 28, 30 of the bed 24. As best illustrated in Fig. 2, the curved path 26 may be shaped as an arc formed about a center point 32. In the illustrated embodiment, the curved path 26 traces a radius distance "r" from the center point 32 and spans an approximately 105° arc about the center point 32.

A central region 40 may be provided intermediate the first and second bed ends 28, 30. In the illustrated embodiment, the central region 40 is located generally equidistant from the first and second bed ends 28, 30. According to certain embodiments, the central region 40 may define a loading area for receiving objects to be transported. However, the loading area may be located in other positions; for example, the loading area may be disposed at 42, near the second end 30, as illustrated.

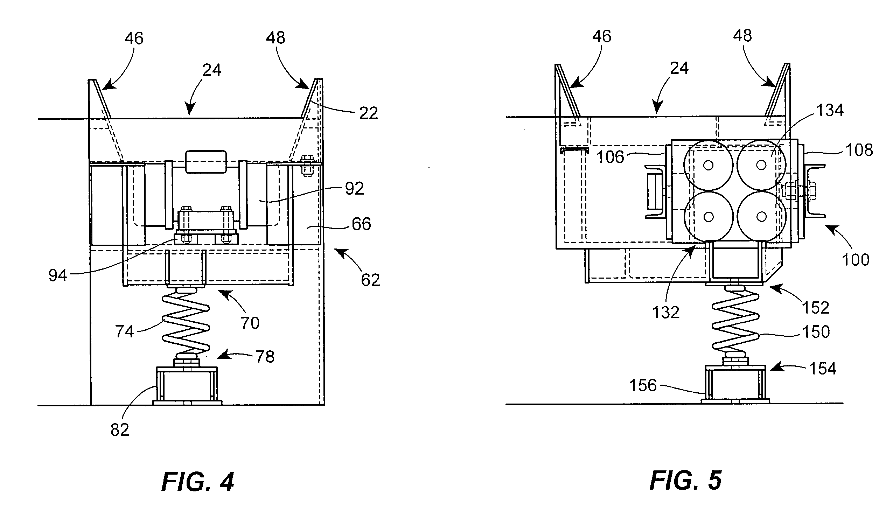

Extending upwardly from the bed 24 are inner and outer rails 46, 48. The rails 46, 48 are best seen in Figs. 4 and 5. While a particular height has been chosen for the rails 46, 48 as illustrated, this is merely an exemplary height. The height of the rails 46, 48 may be greater than or less than that illustrated, or the rails 46, 48 may be removed altogether.

Returning to Fig. 2, it will be recognized that depending from the bed 24 are mounting brackets 50, 52, 54. The mounting brackets 50 are disposed between the central region 40 and the end 28, while the mounting brackets 54 are disposed between the central region 40 and the end 30. The mounting brackets 50, 54 are used to couple the vibration generators to the trough assembly 22, as explained in greater detail below. The mounting bracket 52 is disposed approximately beneath the central region 40, and is used to couple the exciter mass assembly to the trough assembly 22. Thus, the brackets 50, 54 (and vibration generators) are disposed on opposite sides of the bracket 52 (and the exciter mass assembly).

As is illustrated in Fig. 2, the conveyor 20 includes frame 58 including subframes 60, 62 which have legs 64, 66 that are coupled to the brackets 50, 54. The portion of the frame 58 that connects the subframes 60, 62 has been removed to improve clarity. As is also illustrated in Fig 4, the subframes 60, 62 are coupled to the first ends 68, 70 of resilient members 72, 74, which may be in the form of compression springs, as shown, and which may function as isolation springs or isolators for the conveyor 20. The second ends 76, 78 of the resilient members 72, 74 may be coupled to anchor plates 80, 82, which in turn may be secured to the support surface, such as a floor, by anchor bolts (not shown), for example. As will be recognized, the isolators 72, 74 minimize the impact of the vibrations generated by the conveyor 20 on the surrounding environment.

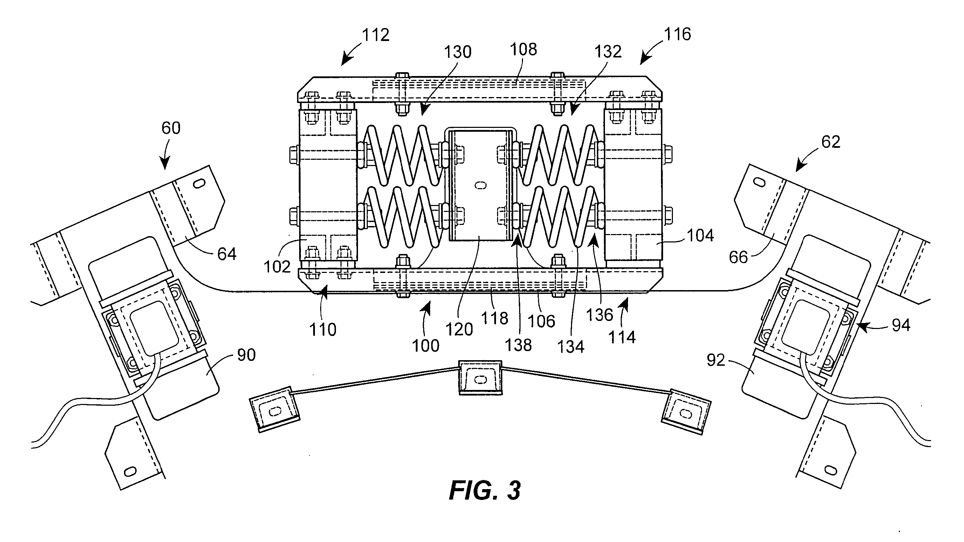

As seen in Figs. 2-4, mounted or attached to each of the sub frames 60, 62 are electric motors assemblies 90, 92, which may also be referred to as vibration generators. As best seen in Figs. 3 and 4, the motor assemblies 90, 92 may be attached to the subframes 60, 62 at 94 at four points through the use of fasteners, such as nut and bolt assemblies. Each motor assembly 90, 92 may have a shaft (not shown) with an eccentric weight (not shown) attached. Rotation of the motor assemblies 90, 92 in one direction (indicated by arrows "A" in Fig. 2) causes motion of objects along the trough assembly 22 in one direction (indicted by arrow "B" in Fig. 2), while reversal of the rotation of the motor assemblies 90, 92 causes motion of objects along the trough assembly in the opposite direction. While the illustrated embodiment includes electric motors, it will be appreciated that other types of vibration generators, such as a rotatable eccentric shaft, may be used without departing from the scope of this disclosure.

Thus, as is also illustrated in Fig. 2, the conveyor includes a linear-stroke exciter mass assembly 100 for generating vibratory forces used by the conveyor 20 to transport objects along the bed 24. As best seen in Fig. 3, the exciter mass assembly 100 includes first and second exciter end assemblies (or masses) 102, 104 and, optionally, first and second rigid side plates 106, 108. The first exciter end assembly 102 is attached to the first ends 110, 112 of the first and second side plates 106, 108, while the second exciter end assembly 104 is attaches to the second ends 114, 116 of the first and second side plates 106, 108. Tuning masses 118 may also be attached to the side plates 106, 108 to vary the frequency of the exciter mass assembly 100, or, optionally, may be attached directly to end assemblies 102, 104. The exciter mass assembly 100 also includes a central mount 120, which mount 120 maybe attached to the frame 58 and which may be coupled to the trough assembly 22 via the mounting bracket 52. Collectively, the end assemblies 102, 104, optional plates 106, 108, and mount 120 may define an exciter mass assembly frame.

Coupled between the mount 120 and the end assemblies 102, 104 are two pluralities of resilient members 130, 132 attached to opposing surfaces of the mount 120. As seen best in Fig. 5, each plurality 130, 132 includes four individual resilient members 134, which may be compression springs, for example. The resilient members 134 may be coupled at a first end 136 to one of the end assemblies 102, 104 and at a second end 138 to one of the opposing surfaces of the central mount 120. While a four resilient members have been shown in each plurality of resilient members 130, 132, according to other embodiments of the conveyor 20, the number of resilient members 134 in each plurality may vary, and may even be a single resilient member 134. The resilient members 130, 132 may function as reactor springs.

Also coupled to the exciter end assemblies 102, 104 are resilient members 150, which may be in the form of compression springs, as shown, and which may function as isolation springs or isolators for the conveyor 20 similar to the resilient members 72, 74. In particular, the resilient members 150 may be coupled at a first end 152 to one of the masses 102, 104 and at a second end 154 to an anchor plate 156 that may be coupled to the supporting surface, such as a floor, by anchor bolts (not shown), for example. Optionally, the resilient members 150 may be replaced with legs, which legs may have an 1-shaped cross-section.

The vibration generators 90, 92 produce vibratory forces that may be transmitted through the frame 58 and that may be transmitted through the subframes 60, 62, mounting brackets 50, 54, the trough assembly 22 and the mounting bracket 52 to the exciter mass assembly 100. The motion of the exciter mass end assembly 100 under the influence of this transferred vibration increases the vibration of the conveyor 20 over that which would be possible if the conveyor 20 were driven by the generators 90, 92 alone. That is, the resilient members 130, 132 may have a resonant frequency in an axial direction such that, when the generators 90, 92 are operated at or near this resonant frequency, a horizontal component of the vibratory forces is amplified by the springs 130, 132.

The conveyor 20, as thus assembled, may have several advantages relative to other conveyors, both curved and straight, known to the skilled practitioner.

Initially, the conveyor 20 does not require the motors 90, 92 to "brute force" the trough assembly 22 and the exciter mass assembly 100. Instead, the motors 90, 92 need only brute force the trough assembly 22. As a consequence, the motors 90, 92 may be smaller than in a conveyor where the motors 90, 92 must brute force both the trough assembly 22 and the exciter mass assembly 100.

Moreover, the use of smaller motors 90, 92 leads to a shift of the center of gravity to closer to the trough assembly 22, which leads to a more compact conveyor. Also, the upward shift of the center of gravity results in the requirement for a smaller counterweight. The smaller counterweight may lead to an overall reduction in the weight of the conveyor 20.

Further, the use of two motors 90, 92 spaced from the center of trough assembly 22, as opposed to one motor positioned substantially at the center of the trough assembly 22, may permit greater flexibility in positioning the vertical component of the stroke on the center of gravity of the conveyor 20. In particular, this positioning may be performed substantially without offsetting the motors and the motor wheels. As a consequence, the motors 90, 92 may be run closer to full wheel, which may lead to reduced complexity in wheel fabrication and settings.

Additionally, the use of a linear-stroke exciter mass assembly 100 may lead to further weight reduction through enhanced efficiency. That is, it is believed that the linear-stroke exciter permits more efficient use of the mass of the exciter mass assembly 100 in operating the conveyor 20. Consequently, a smaller mass assembly 100 may be used than with other conveyors that do not use a linear-stroke exciter to produce a similar action. The smaller mass of the exciter mass assembly 100 may also lead to easier fabrication of the assembly 100, and overall reduction in the size of the conveyor 20.

## Claims

1. A vibratory conveyor comprising:
a trough;
a linear-stroke exciter mass assembly coupled to the trough at a central region thereof;
first and second vibration generators attached to the trough on opposite sides of the exciter mass assembly; and
isolators coupled to and supporting the trough.

2. The vibratory conveyor according to claim 1, wherein the first and second vibration generators are electrical motors.

3. The vibratory conveyor according to claim 1, wherein the exciter mass assembly comprises a central mount coupled to the trough, first and second pluralities of resilient members, and first and second exciter end assemblies, the first ends of the first and second pluralities of resilient members coupled to opposing surfaces of the mount and the second ends of the first and second pluralities of resilient members coupled to the first and second exciter end assemblies.

4. The vibratory conveyor according to claim 3, wherein the resilient members are compression springs.

5. The vibratory conveyor according to claim 4, comprising tuning masses coupled to the first and second exciter end assemblies.

6. The vibratory conveyor according to claim 5, comprising a frame attached to the trough and the mount of the exciter mass assembly, the vibration generators being attached to the frame.

7. The vibratory conveyor according to claim 1, wherein the isolators comprise resilient members.

8. The vibratory conveyor according to claim 7, wherein the resilient members are compression springs.

9. The vibratory conveyor according to claim 1, comprising a frame attached to the trough and the vibration generators attached to the frame.

10. The vibratory conveyor according to claim 9, at least one of the isolators attached to the frame.

11. The vibratory conveyor according to claim 1, wherein the vibration generators have a first state in which an object moves along the trough in a first direction, and a second state in which an object moves along the trough in a second opposite direction.

12. The vibratory conveyor according to claim 11, wherein the vibration generators are reversible electric motors, the first state comprising rotation of the motors in a first direction and the second state comprising rotation of the motors in a second opposite direction.

13. The vibrator conveyor according to claim 1, wherein the trough is curved.

14. The vibratory conveyor according to claim 1, wherein the vibration generators move the trough such that an object disposed on the trough moves along the trough in a curved path.
